# EUROPEAN PATENT APPLICATION

(11) **EP 1 743 792 A2**
(43) Date of publication of application: **17.01.2007**
(21) Application number: 06253627.1
(22) Date of filing: 11.07.2006
(51) Int. Cl.: B60J 10/00

(54) **Fitting of flexible strips**

(30) Priority: 12.07.2005 GB 0514295
(71) Applicant: GDX North America Inc., Dover Delaware 19901 (US); AUDI AG, 85057 Ingolstadt (DE)
(72) Inventor: Dragon, Horst, 41065 Moenchengladbach (US); Blum, Rocco, 74670 Forchtenberg (DE); Borho, Heiko, 74177 bad Fried-Richshall (DE)
(74) Representative: Foster, Mark Charles

(57) **Abstract**

A tool 62 is disclosed for mounting a sealing strip to the flange of a boot/trunk opening 56 in the vehicle body 54. The tool 62 is particularly suitable for mounting the strip 1 in the region of obstructions caused by hinge arms 50 and hydraulic ram 60. The channel-shaped strip 1 is initially positioned over the flange 22 around the opening 56 with its side walls in a splayed apart position. The arms 68 of the tool 62 are inserted into the spaces 86,88 between the flange 22 and the hinge arm and the space between the flange 22 and the vehicle body 54 and are moved into generally parallel alignment, clamping the side walls of the strip 1 against the flange 22 so that the side walls thereafter have a generally parallel configuration and cause the sealing strip 1 to grip the flange 22.

## Description

The invention relates to the fitting of flexible strips particularly, though not exclusively, for use on motor vehicle bodies such as for sealing around a boot or tunk and other closable opening of a vehicle.

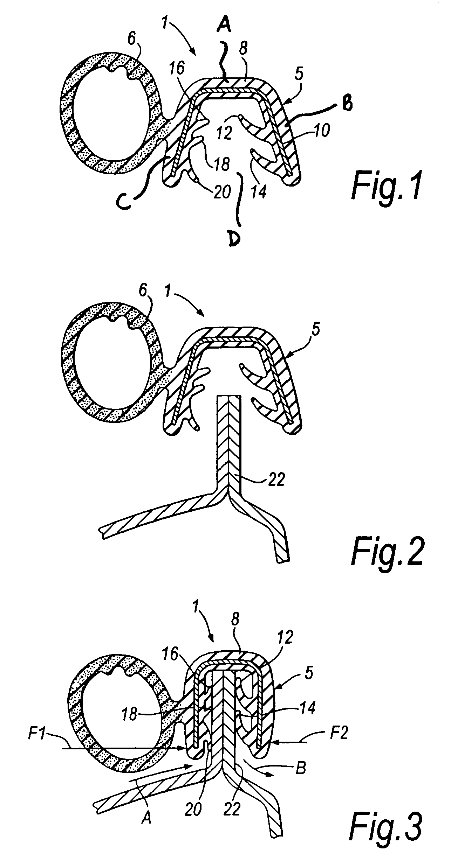

GB 2212844 discloses a sealing strip for a vehicle door, or boot or trunk, opening that has a generally channel-shaped gripping part, the side walls of which are splayed apart so as to enlarge the mouth so easing its application onto a mounting flange of the door or boot/trunk, as will be described in more detail hereinafter with reference to Figures 1 to 3.

A tool suitable for pressing the side walls of the channel-shaped gripping part together in order to mount the sealing strip securely to the flange is disclosed in EP 1115589, and is described in more detail hereinafter with reference to Figure 4. An alternative tool arrangement is disclosed in EP 0497048.

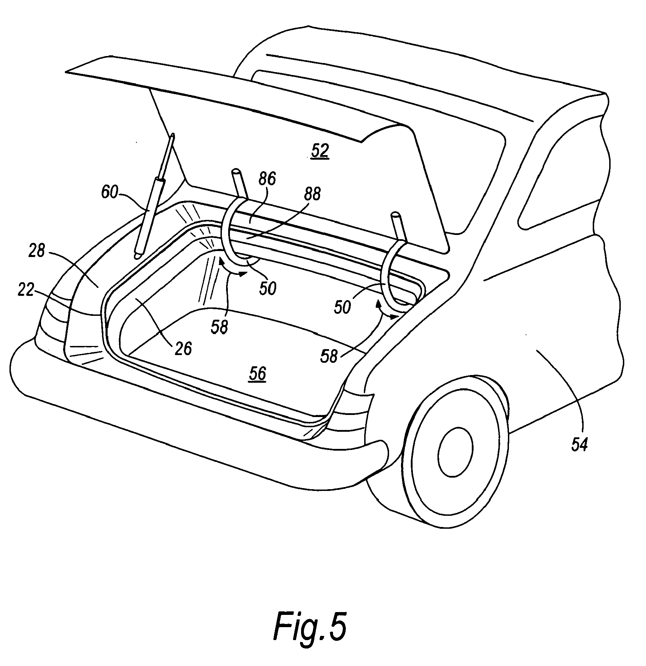

A problem with these known tools arises in particular when there is an obstruction in the region of the door or boot/trunk opening. Such an obstruction makes it difficult or impossible to fit the strip using the tools disclosed in EP 1115589 or EP 0497048. An obstruction may be present, for example, when the boot/trunk lid is mounted to the vehicle body, the obstruction being formed by the hinge arms which connect the boot/trunk lid to the body and allow the lid to be moved with respect to the vehicle body, as will be described in more detail hereinafter in relation to Figure 5.

According to the invention, there is provided a tool for fitting a channel-shaped strip having a base and two side walls forming a channel into an embracing frictional position on a mount, the tool comprising a tool body; first and second clamping members mounted on the body such that at least one of the clamping members is movable with respect to the other clamping member, each of the clamping members having a clamping end; means for controlling movement of said at least one of the clamping members in order to move the clamping members from a first position, in which there is a first distance between the clamping ends of the clamping members, and a second position, in which there is a second, larger distance between the clamping ends of the clamping members; the strip being received between the clamping ends when the clamping members are in the second position, whereafter said movement controlling means moves said clamping ends to the first position to exert a force tending to press the sidewalls of the channel of the strip towards the mount.

The invention also relates to the tool in combination with the strip.

According to the invention there is also provided a method of sealing around an opening in a vehicle body having a mount around the periphery thereof, the method including positioning a channel-shaped strip having a base and sidewalls forming a channel on the mount and fitting the strip to the mount using a tool; the tool comprising a tool body, first and second clamping members mounted on the body such that at least one of the clamping members is movable with respect to the other clamping member, each of the clamping members having a clamping end, and means for controlling movement of said at least one of the clamping members in order to move the clamping members from a first position, in which there is a first distance between the clamping ends of the clamping members, and a second position, in which there is a second, larger distance between the clamping ends of the clamping members; the fitting step comprising receiving the strip between the clamping ends when the clamping members are in the second position, whereafter said movement controlling means moves said clamping ends to the first position to exert a force tending to press the sidewalls of the channel of the strip towards the mount.

According to the invention, there is further provided a method of fitting a channel-shaped strip having a base and two side walls forming a channel into an embracing frictional position on a mount using a tool comprising a tool body; first and second clamping members mounted on the body such that at least one of the clamping members is movable with respect to the other clamping member, each of the clamping members having a clamping end, and means for controlling movement of said at least one of the clamping members in order to move the clamping members from a first position, in which there is a first distance between the clamping ends of the clamping members, and a second position, in which there is a second, larger distance between the clamping ends of the clamping members; the method including locating the clamping ends in the second position either side of the strip and moving said clamping ends to the first position to exert a force tending to press the sidewalls of the channel of the strip towards the mount.

A tool embodying the invention for sealing around an opening on a motor vehicle body, and methods according to the invention of mounting strips around such openings, will now be described, by way of example only, with reference to the accompanying diagrammatic drawing in which:-
Figure 1 is a cross-section through the sealing strip of GB 2212844 before fitment to the vehicle body;
Figure 2 corresponds to Figure 1 but shows the strip in the course of being fitted to the vehicle body;
Figure 3 corresponds to Figure 2 but shows the sealing strip fitted in position;
Figure 4 is a side elevation of the tool disclosed in EP 1115589;
Figure 5 shows a partial perspective view of the boot/trunk lid and boot/trunk lid opening of a motor vehicle;
Figure 6 shows an overhead and right-side perspective view of a tool in accordance with the invention;
Figure 7 shows an overhead partially cut away view of the tool;
Figure 8A and 8B show overhead views of part of the clamping end of the tool having different contour inserts attached thereto; and
Figure 9 shows a perspective view of the tool being used to fit a sealing strip to the boot/trunk lid opening of a motor vehicle.

In the Figures like elements are generally designated with the same reference numerals.

As shown in Figure 1, the sealing strip 1 is manufactured so as to comprise a generally channel-shaped gripping part 5 and a tubular sealing part 6. The strip 1 comprises a base A, first sidewall B and second sidewall C, which form a channel D. The gripping part 5 comprises extruded plastics or rubber material 8 in which is completely embedded a metal core or carrier 10. The carrier may take any suitable form. For example, it may comprise inverted U-shaped metal elements arranged side-by-side along the length of the gripping part so as to define a channel and either connected together by short connecting links or completely disconnected from each other. Instead, however, the carrier 10 could be made from wire looped to and fro from one distal edge of the channel to the other and again extending longitudinally along the gripping part. In each case, however, the purpose of the carrier is to improve the resilience and gripping force of the gripping part on the motor vehicle body, without significantly impairing its flexibility.

The gripping part 5 may be conveniently manufactured by using a crosshead extruder, the e'xtruded plastics or rubber material 8 completely embedding the carrier 10.

The extrusion process is arranged to form lips 12, 14, 16, 18 and 20 on the interior of the channel and each running longitudinally along the full length of the strip. The lips are preferably extruded integrally with the material 8, though need not be of the same hardness; advantageously in fact they are made of softer material than the channel- shaped extruded material 8.

It will be noted that the lips 12 and 14 on one side of the channel are larger than those on the other. It will also be noted that all the lips except the lip 20 are directed generally towards the inverted base of the channel, whereas the lip 20 is directed in the opposite direction - that is, towards the open mouth of the channel.

It will further be noted that, as manufactured and as shown in Figure 1, the sidewalls of the channel are splayed outwards so as to enlarge the width of the mouth of the channel.

The tubular sealing part 6 is made of soft flexible material such as rubber. preferably of cellular or foamed form. The tubular sealing part 6 may be manufactured separately and then secured to one outside wall of the gripping part 5 by means of adhesive. Instead, however, it could be extruded integrally with the material 8.

In use, the sealing strip 1 is mounted on the flange which runs around the door or boot/trunk opening on the vehicle body, this flange being the flange being formed by the welded joint between the edges of the body panels which meet there.

Figure 2 shows the sealing strip 1 being offered up to this flange 22. This process may be carried out manually or automatically or semiautomatically by robot. As shown in Figure 2, the splayed-open mouth of the channel of the gripping part 5 is sufficiently wide to enable the flange 22 to pass easily into the channel and between the lips on the opposite channel sidewalls.

The sealing strip 1 is then subjected to a mechanical bending process which bends the channel sidewalls of the gripping part 5 towards each other, so as generally to render them substantially parallel. Figure 3 shows the cross-sectional shape of the gripping part 5 at the completion of this process, the closing force being applied to the gripping part in the directions and the positions of the arrows Fl and F2. The metal of the carrier 10 permits this bending and thereafter resiliently retains the gripping part 5 in the shape shown in Figure 3. The lips are thus pressed into contact with the sides of the flange 22.

The frictional force created between the lips and the flange surfaces, which may be increased by the use of softer material for these lips, helps retain the gripping part 5 on the flange 22 and resists forces tending to remove it. The gripping part 5 thus supports the tubular sealing part 6 so as to run around the periphery of the door or boot/trunk opening, on its outside, and to be contacted by the edge of the closing door or boot/trunk. The edge compresses the seal 6 and provides a weatherproof seal.

The lips carry out a secondary sealing function. Thus, if moisture or draughts should pass under the tubular seal 6 in the direction of the arrow A and enter the interior of the channel, the lips prevent the moisture or draughts passing around the inside of the channel, over the distal edge of the flange and thence into the interior of the vehicle in the direction of the arrow B.

The force applied in the direction of the arrow Fl can if necessary be applied via the tubular sealing section 6 itself.

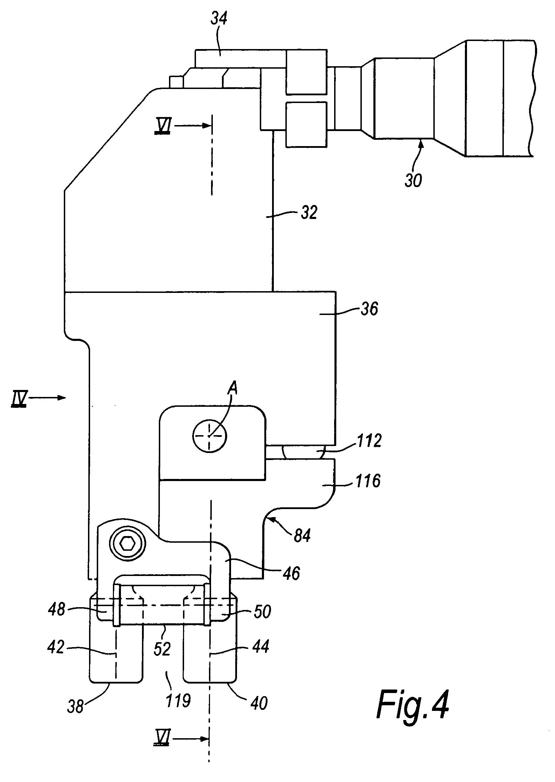

Referring tc Figure 4, the tool shown there comprises a motor 30 such as an air motor driven by compressed air. The motor 30 is connected to a gearbox 32 by a mounting bracket 34. The gearbox 32 supports a main tool body or output unit 36 from which rotatably extend two main rollers 38 and 40. The rollers 38 and 40 are arranged to be rotatable around respective axes shown dotted at 42 and 44. Via the gearbox 32, the output shaft (not shown) of the air motor 30 drives the rollers 38 and 40 to rotate in opposite directions about these axes.

The output unit 36 also carries a roller support 46 which has two oppositely facing jaws 48 and 50 between which is rotatably mounted a third or "top" roller 52 which is undriven.

In use, the strip 1, in the configuration shown in Figure 1 is placed over the mounting flange 22. The tool is then placed over the strip 1 on the flange so that the gripping part 5 (with its splayed-apart side walls), and the sealing part 6, all become positioned in the space 119 between the side rollers 38 and 40 (it will be appreciated that the strip 1 shown in Figures 1 and 2 is illustrated to a much larger scale than the scale of the tool). The tool is positioned over the strip 1 so that roller 38 is in contact with the outside of the gripping par. 5 and roller 40 is in contact with the outermost surface of the sealing part 6. During this initial positioning step, the force exerted on the two rollers 38 and 40 by the compressed material of the strip 1 as it becomes forced into the gap 119 may cause the sub-frame 84 to pivot on the pivot axis A against the force of a spring (not shown). The roller 40 thus becomes slightly inclined to the roller 38 (that is, it becomes inclined with respect to line VI-VI). However, any such pivotting movement will be small because the spring is arranged to exert a strong force.

Once the rollers are in contact with the strip, the tool is carried along the strip 1 on the flange 22, with the top roller 52 freely rotating on the outside of the inverted base of the gripping part 5 of the strip 1, the tool being guided during its travel by the fitter. The tool may instead be guided by a robot "hand".

As the tool moves in this way along the strip on the flange, the rollers 38, 40 have the effect of forcing the splayed-apart side walls of the gripping part 5 towards the flange 22 so that the lips 12,16,18,20 make tight frictional contact with the flange 22. During this process, the gripping part 5 is similarly re-configured and ensures that, as the tool passes each particular point along the length of the strip 1, the gripping part 5 maintains its new configuration which corresponds to that shown in Figure 3 and in which the strip is held securely on the flange 22.

Although Figures 2 and 3 show the flange 22 as comprising two contacting body panels 26,28, there may be positions along the frame of the door or boot/trunk opening where, locally, the flange comprises more than two contacting panels. This will therefore cause a local variation in thickness of the flange 22. There may be other reasons why the thickness of the flange 22 varies locally along the periphery of the door opening: there may be a local variation in the thickness of one or more of the body panels for example, and the welding points may also cause thickness variations. However, the tool is able to accommodate such variations in flange thickness because the roller 40 can pivot away from the roller 38 outwardly directed force produced by the seal 1 when the compressed within the gap 119 becomes increased by a local increase in thickness of the flange 22 and overcomes the force exerted by the spring. The ability of the roller 40 to pivot in this way ensures that any local increase in flange thickness does not cause an excessively damaging force to be exerted by the rollers on the strip 1 both at the beginning and during the tool's travel along the strip 1.

Although the tool shown in Figure 4 works satisfactorily where the area around the flange 22 is free of obstructions, such as when a vehicle is being manufactured and the boot/trunk lid and doors are not yet mounted to the vehicle body, such a tool cannot mount the strip 1 satisfactorily in the region where an obstruction is present. Such an obstruction might comprise, for example, the hinges that attach a vehicle door to the body or, as shown in Figure 5, the hinge arms 50 which attach the trunk lid 52 to the vehicle body 54 and allow angular movement of the boot/trunk lid 52 with respect to the body 54 in order that the boot/trunk opening 56 can be opened and closed.

The hinge arms 50 may be mounted to the boot/trunk lid 52 by bolts or welding and are coupled to the vehicle body 54 by a hinge arrangement (not shown) that allows rotational movement of the boot/trunk lid 52 and hinge arms 50 in the direction of arrows 58. A further obstruction is provided by a hydraulic ram 60 which controls movement of the boot lid 52 with respect to the vehicle body 54 so that the boot lid can be held in an open position (as shown in Figure 5). The panels 26, 28 define the opening 56 in the vehicle body, with the flange 22 being formed where these panels meet.

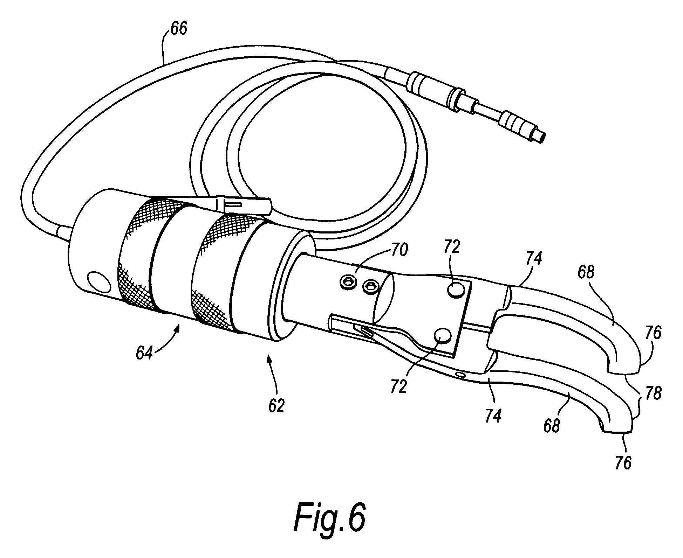

Figure 6 shows a tool for use in mounting the strip 1 to the flange 22 in the region of the obstructions (hinge arms 50 and hydraulic ram 60). The tool comprises a cylindrical motor body 64 which is coupled to a compressed air supply (not shown) by pipe 66. A pair of clamping members in the form of curved arms 68 are coupled to the motor body 64 by a frame 70 using bolts 72. The bolts 72 allow for movement of the arms 68 with respect to the frame 70 in the manner to be described in more detail below.

Each of the arms 68 comprises a mounting portion 74 which is coupled to the frame 70 by one of the bolts 72. The mounting portion 74 is generally linear (straight). As the arm 68 extends away from the frame 70 the curvature of the arm 68 increases. The arm 68 terminates in a clamping end 76 which extends generally perpendicularly to the mounting portion 74 (and extends downwardly in the view shown in Figure 6). The part of the arm 68 between the mounting portion 74 and the clamping end 76 may be generally eliptical in cross-section. However, the clamping end 76 is generally rectangular in cross-section so that it provides a flat engagement surface 78 for pressing against the strip 1. Other configurations of the clamping end 76 are possible and these are discussed below.

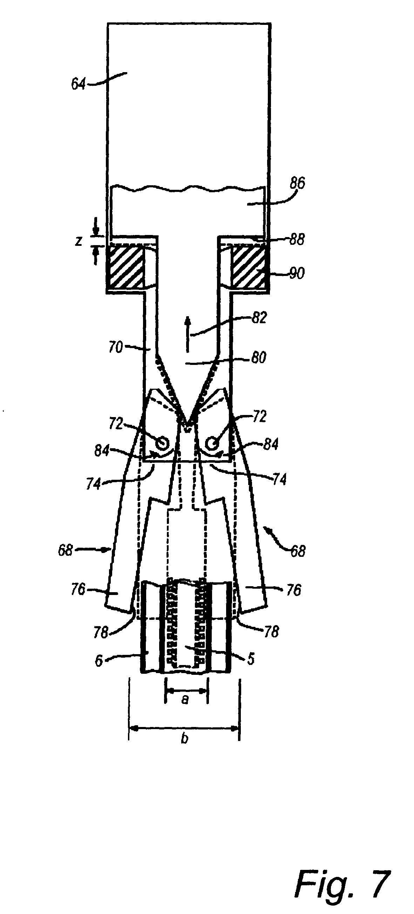

The operation of the tool 62 will now be described with particular reference to Figure 7. The arms 68 are mounted to the frame 70 by bolts 72, as described above. This mounting arrangement allows pivotal movement of the arms 68 about the axis of the bolts 72. The mounting arrangement of the arms 68 is such that the arms are biassed to have a second position in which the arms 68 are splayed apart from one another in the position shown in solid lines in Figure 7. This biassing may be provided by a coil spring, a leaf spring or any other suitable means. However, the arms 68 do not in fact have this position when the motor is de-energised. When the motor is de-energised, an end point of a tapered wedge member 80 extends between the mounting portions 74 of the arms 68 in the position shown by dotted lines in Figure 7 in order to control the orientation of the arms 68 and to render them generally parallel against the biassing force. This first position of the arms 68 is shown in Figure 6 and by the dashed lines in Figure 7. In this first position the arms have a distance *a* therebetween. In order to control the orientation of the arms when in this first position, the tapered wedge member 80 includes a piston-shaped portion 86 mounted within the cylindrical motor body 64. The piston-shaped portion 86 includes a planar abutment surface 88. An annular bush 90 extends around the tapered wedge member 80 and is fixed to the base of the cylindrical motor body 64. When the arms 68 are in the first position, the abutment surface 88 of the piston-shaped member 86 may abut the upper surface (in the Figure) of the bush 90 in order to prevent further downward movement of the tapered wedge member 80 (and hence further movement together of the arms 68). When the arms 68 are in the first position, the abutment surface 88 of the piston-shaped member 86 may be in the position shown by dotted lines in Figure 7. The variation in the distance z between the abutment surface 88 and the bush 90 adjusts the distance *a*/*b* between the clamping surfaces 78 of the arms 68.

By means of a compressed air-powered motor (not shown) contained in the motor body 64, the wedge member 80 is linearly and reciprocally movable in the direction of arrow 82. When the motor causes the wedge member 80 to move in the direction of arrow 82 the wedge member 80 has the position shown in solid lines in Figure 7. This causes the arms 68 to pivot about the bolts 72 in the direction of arrows 84 by virtue of the biassing, so that the arms have the second, splayed apart configuration with their clamping surfaces 78 spaced apart by a distance *b* and shown by solid lines in Figure 7.

The arms 68 are dimensioned so that they can fit in the space 86 (Figure 5) between the vehicle body 54 and the panel 28 and the space 88 between the panel 26 and the hinge arm 50. The engagement surfaces 78 of the arms 68 can therefore be positioned either side of the flange 22 (with the strip 1 mounted thereon) in the region of the hinge arms 50 (and also ram 60).

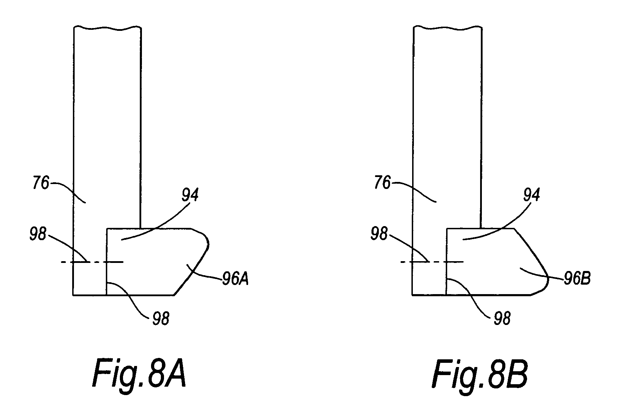

In Figures 6 and 7, the engagement surfaces 78 of the arms 68 are flattened surfaces that are aligned with the remainder of the arms 68. Figures 8A and 8B show an alternative arrangement of the clamping end 76 of one of the arms 68 (in practice, the pair of arms 68 would have the same configuration of clamping end 76 usually). The clamping end 76 has a rectangular recess 92 formed therein for receiving a correspondingly sized engagement part 94 of a contour insert (96A in Figure 8A and 96B in Figure 8B). The contour inserts 96A,96B may be fixed to the clamping end 76 by any suitable means, such as by a screw, indicated schematically at 98. As shown in Figures 8A and 8B, the contour insert may have a curved and/or inclined surface for pressing against the strip 1 in order to clamp the strip 1 to the flange 22. The configuration of the surface of the contour inserts 96A,96B is selected in dependence upon the shape and configuration of the strip 1 in order to optimise clamping of the strip 1 to the flange 22.

The contour inserts 96A and 96B are readily interchangeable (by means of screw 98). This enables a single tool 62 to provide optimised clamping by fitting a contour insert that is appropriate to a particular strip 1 and flange 22. Therefore, for example, a single tool 62 can be used to fit strips to a variety of different vehicles in an optimised fashion simply by changing the contour insert.

In order to mount the strip 1 to the flange 22 of the boot/trunk opening 56, the strip 1 with its side walls in the splayed apart position as shown in Figures 1 and 2 is positioned onto the flange 22. In the regions away from the hinge arms 50 and the ram 60 the side walls of the gripping part 5 may be brought into the parallel gripping configuration shown in Figure 3 by means of the tool disclosed in EP 1115589 or EP 0497048. However, as discussed above, such tools are not suitable for mounting the gripping part 5 to the flange 22 in the region of obstructions such as the hinge arms 50 and the ram 60. In these regions the tool 62 is used.

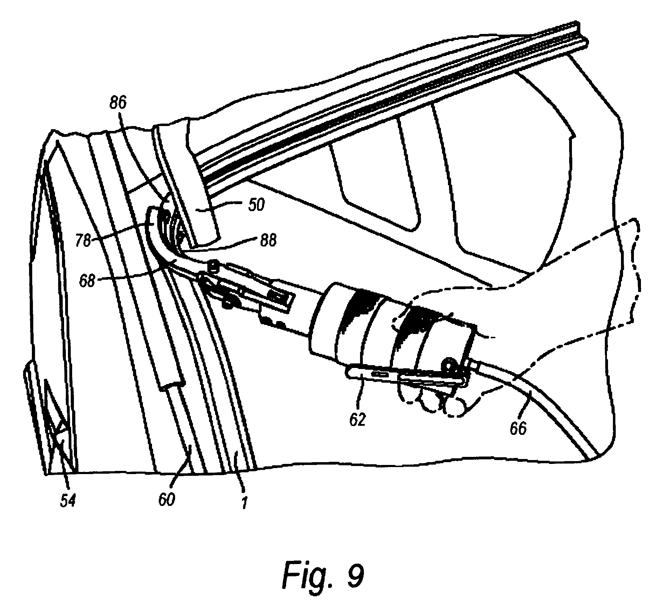

In order to mount the strip 1 securely to the flange 22 in the region of an obstruction, the motor is energised in order to move the wedge member 80 from the position shown by dashed lines in Figure 7 to the position shown by solid lines in Figure 7. This causes the arms 68 to move apart from one another at their tip - in the position shown by solid lines in Figure 7. With the arms 68 in this orientation, the clamping ends 78 are located in the respective spaces 86,88 either side of the flange 22 (which now has the strip 1 positioned thereover - as shown in Figure 9). Part of the strip 1 before clamping by the tool is shown in Figure 7 with solid lines.

The motor is then momentarily de-energised which causes the wedge member 80 to move from the position shown in solid lines in Figure 7 to the position shown in dashed lines in Figure 7, thereby causing the arms 68 to pivot about the bolts 72 and take up the generally parallel position shown by dash lines in Figure 7. This causes substantial compression of the sealing part 6 (so that the hollow chamber thereof is substantially completely compressed) and the gripping part 5 of the strip 1, so that the side walls of the gripping part 5 are pressed into the parallel configuration shown in Figure 3. The strip 1 as compressed by the arms 68 is shown in dashed lines in Figure 7.

The motor is then re-energised, causing movement of the wedge member 80 to the position shown in solid lines in Figure 7 so that the arms 68 adopt the splayed apart position shown in solid lines in Figure 7. The tool 62 can then be moved longitudinally along the strip 1 so that the adjacent region of the strip 1 can be securely mounted to the flange 22, if required, or the tool 62 can be removed.

As described above, the strip 1 in the region around the hinge arms 50 and the ram 60 is mounted securely to the flange 22 using the tool 62. An alternative tool may be used to mount the remainder of the seal, or of course the tool 62 could be used to mount the complete strips - even in regions where no obstruction is present.

The distance b between the engagement surfaces 78 of the (or contour inserts 96A/96B if provided) splayed-apart arms of the tool 62 is sufficient to accommodate local variations in thickness of the flange 22.

## Claims

1. A tool (62) for fitting a channel-shaped strip (1) having a base (A) and two side walls (B,C) forming a channel (D) into an embracing frictional position on a mount (22), the tool (62) comprising a tool body (70); and first and second clamping members (68) mounted on the body (70) such that at least one of the clamping members is movable with respect to the other clamping member, each of the clamping members (68) having a clamping end (76); and **characterised by** means (80,86) for controlling movement of said at least one of the clamping members (68) in order to move the clamping members (68) from a first position, in which there is a first distance between the clamping ends (76) of the clamping members (68), and a second position, in which there is a second, larger distance (b) between the clamping ends (76) of the clamping members (68); the strip (1) being received between the clamping ends (76) when the clamping members (68) are in the second position, whereafter said movement controlling means (80,86) moves said clamping ends (76) to the first position to exert a force tending to press the sidewalls (B,C) of the channel (D) of the strip (1) towards the mount (22).

2. The tool of claim 1, wherein the first and second clamping members (68) are mounted on the body (70) side by side, and wherein the clamping members (68) in the second position are splayed apart and in the first position extend generally parallel to one another.

3. The tool of claim 1 or claim 2, wherein said at least one of the clamping members (68) is mounted on the body (70) for rotational movement with respect to the body (70).

4. The tool of claim 1,2 or 3, wherein the clamping ends (76) comprise a generally planar surface (78) for engaging the strip (1).

5. The tool of any one of claims 1 to 4, wherein at least one of the clamping members (68) comprises an elongate arm which is mounted on the body (70) at one end thereof and has the clamping end (76) thereof at the opposite end.

6. The tool of claim 5, wherein the arm is curved such that the opposite ends thereof extend generally perpendicularly to one another.

7. The tool of any one of claims 1 to 6, wherein the movement controlling means (80,86) comprises a driving member (80) for engaging a surface of the clamping members (68) for causing movement thereof.

8. The tool of claim 7, wherein the driving member (80) is generally wedge-shaped and extends between the clamping members (68).

9. The tool of claim 7 or 8, wherein the driving member (80) is movable linearly with respect to the clamping members (68), the arrangement being such that linear movement of the driving member (80) causes rotational movement of said at least one of the clamping members (68).

10. The tool of any one of claims 1 to 9, wherein the movement controlling means (80,86) is powered by compressed air.

11. The tool of any one of claims 1 to 10, wherein the tool (62) is arranged such that the clamping ends (76) of the clamping members (68) are operable to fit the strip (1) to the mount (22) in a region where there is an obstruction adjacent to the mount (22).

12. The tool according to any one of claims 1 to 11, wherein the mount (22) comprises a flange and the tool (62) is operable to clamp the side walls of the strip (1) to the flange (22).

13. The tool of any one of claims 1 to 12, wherein at least one of the clamping members (68) is biassed into said first position or said second position, the movement controlling means (80,86) being operable to move that clamping member against the bias.

14. In combination, the tool (62) of any one of claims 1 to 13 and the sealing strip (1) having the base (A) and the side walls (B,C) forming a channel (D).

15. The comoination of claim 14, wherein the side walls (B,C) are initially splayed apart to facilitate positioning of the strip (1) on the mount (22) and being adapted to be thereafter pressed towards each other, by the application of force of said tool (62), into a subsequently retained configuration embracingly gripping the mount (22).

16. The combination of claim 14 or 15, wherein the strip (1) includes at least one lip (12 - 20) made of flexible material in the channel (D) for being pressed into contact with the mount (22) upon the application of force.

17. The combination of any one of claims 14 to 16, wherein the strip (1) is formed of generally flexible material (8) having a relatively rigid generally U-shaped reinforcement member (10) embedded therein which extends around the channel (D), the tool (62) being operable to bend the reinforcement member (10) so that the strip (1) is securely fitted to the mount (22).

18. A method of sealing around an opening in a vehicle body having a mount (22) around the periphery thereof, the method including positioning a channel-shaped strip (1) having a base (A) and sidewalls (B,C) forming a channel (D) on the mount (22) and fitting the strip (1) to the mount (22) using a tool (62); **characterised in that** the tool (62) comprises a tool body (70), first and second clamping members (68) mounted on the body such that at least one of the clamping members is movable with respect to the other clamping member, each of the clamping members (68) having a clamping end (76), and means (80,86) for controlling movement of said at least one of the clamping members (68) in order to move the clamping members (68) from a first position, in which there is a first distance between the clamping ends (76) of the clamping members (68), and a second position, in which there is a second, larger distance (b) between the clamping ends (76) of the clamping members (68); the fitting step comprising receiving the strip (1) between the clamping ends (68) when the clamping members (68) are in the second position, whereafter said movement controlling means (80,86) moves said clamping ends (76) to the first position to exert a force tending to press the sidewalls (B,C) of the channel (D) of the strip (1) towards the mount (22).

19. The method of claim 18, wherein at least one of the clamping members (68) is positioned between an obstruction (50,60) and the strip (1) for fitting the strip (1) to the mount (22) in the region of the obstruction (50,60).

20. The method of claim 19, wherein the obstruction (50,60) is part of a hinge mechanism.

21. The method of claim 18,19 or 20, wherein the opening is the opening (56) of a boot or trunk, the opening being closed by a boot or trunk lid.

22. The method of any one of claims 18 to 21, wherein the tool (62) is as claimed in any one of claims 1 to 17.

23. A method of fitting a channel-shaped strip (1) having a base (A) and two side walls (B,C) forming a channel (D) into an embracing frictional position on a mount (22) using a tool, **characterised in that** the tool comprises a tool body (72); first and second clamping members (68) mounted on the body (72) such that at least one of the clamping members (68) is movable with respect to the other clamping member (68), each of the clamping members (68) having a clamping end (76), and means for controlling movement of said at least one of the clamping members (68) in order to move the clamping members (68) from a first position, in which there is a first distance between the clamping ends (76) of the clamping members (68), and a second position, in which there is a second, larger distance (b) between the clamping ends (76) of the clamping members (68); the method including locating the clamping ends (76) in the second position either side of the strip (1) and moving said clamping ends (76) to the first position to exert a force tending to press the sidewalls (B,C) of the channel (D) of the strip (1) towards the mount (22).

24. The method of claim 23, wherein the tool is as claimed in any one of claims 1 to 17.

25. The method of claim 23 or 24, wherein the strip (1) is formed of generally flexible material (8) having a relatively rigid generally U-shaped reinforcement member (10) embedded therein which extends around the channel (D), the tool (62) bending the reinforcement member (10) so that the strip (1) is securely fitted to the mount (22).

26. The method of claims 23 to 25, wherein the side walls (B,C) are initially splayed apart to facilitate positioning of the strip (1) on the mount (22) and are thereafter pressed towards each other, by the application of force of said tool (62), into a subsequently retained configuration embracingly gripping the mount (22).

27. The tool of any one of claims 23 to 26, wherein at least one of the clamping members (68) is biassed into said first position or said second position, the movement means moves (80,86) that clamping member (68) against the bias.

28. The tool, combination or method of any one of the preceding claims, including a removable insert (94) fitted to said clamping ends (68) for pressing the side walls (B,C) of the channel of the strip (1).
